# EUROPÄISCHE PATENTANMELDUNG

(11) **EP 3 660 340 A2**
(43) Veröffentlichungstag der Anmeldung: **03.06.2020**
(21) Anmeldenummer: 19201843.0
(22) Anmeldetag: 08.10.2019
(51) Int. Cl.: F16B 23/00

(54) **SCHRAUBE UND ANTRIEBSELEMENT**

(30) Priorität: 16.10.2018 DE 102018125672
(71) Anmelder: Adolf Würth GmbH & Co. KG, 74653 Künzelsau (DE)
(72) Erfinder: Eckert, Rainer, 97990 Weikersheim (DE)
(74) Vertreter: Dilg, Haeusler, Schindelmann Patentanwaltsgesellschaft mbH

(57) **Zusammenfassung**

Schraube (100) zum Einbringen in einen Untergrund, aufweisend einen Schraubenschaft (102), und einen sich an den Schraubenschaft (102) anschließenden Schraubenkopf (104), in dem ein Antrieb (106) zum Drehantreiben der Schraube (100) mittels eines Antriebselements (200) ausgebildet ist, wobei der Antrieb (106) einen schraubenaußenseitigen Hohlflügelabschnitt (108) mit kreisförmigem Hohlkern (110) und entlang des Kreisumfangs vorgesehenen Hohlflügeln (112) aufweist, wobei die Hohlflügel (112) sich ausgehend von dem Kreisumfang bis hin zu einer radial äußersten Position hin erstrecken, an der die Hohlflügel (112) entsprechend einem Hohlflügelaußenradius (r1) kreisförmig geformt sind, wobei der Antrieb (106) einen schraubeninnenseitigen Hohlvertiefungsabschnitt (114) aufweist, und wobei der Antrieb (106) an einem axialen Übergang zwischen dem Hohlflügelabschnitt (108) und dem Hohlvertiefungsabschnitt (114) eine kreisförmige Abrundung (116) entsprechend einem Hohlverrundungsradius (r2) aufweist; und wobei der Hohlverrundungsradius (r2) zwischen 50 % und 150 % des Hohlflügelaußenradius (r1) beträgt.

## Beschreibung

Die Erfindung betrifft Schrauben, ein Verfahren zum Herstellen einer Schraube, Antriebselemente, ein Verfahren zum Herstellen eines Antriebselements und eine Anordnung.

Es sind Schrauben mit einem so genannten AW-Antrieb kommerziell verfügbar, der als Innensechsrund mit sechs umfänglich verteilten Flügeln ausgebildet ist und zusätzlich von einem Kegelstumpf durchdrungen ist, der am inneren Durchmesser des Innensechsrundes am Boden des Antriebes ausläuft.

Torx ist die Bezeichnung für ein Schrauben-Mitnahmeprofil in Vielrundform. Es ähnelt einem Davidstern mit abgerundeten Spitzen und Ecken. Der Antrieb kann auch hohe Drehmomente ohne Beschädigung des Schraubenkopfes übertragen

Wenngleich sich aus dem Stand der Technik bekannte Schrauben als leistungsfähig erwiesen haben, können diese unter ungünstigen Begleitumständen in manchen Fällen zu einer unzureichenden Kraftübertragung neigen. Auch besteht noch Raum zur weiteren Verbesserung hinsichtlich Führbarkeit und Zentrierbarkeit einer solchen Schraube durch ein Antriebselement wie ein Bit.

Es ist eine Aufgabe der vorliegenden Erfindung, eine Schraube und ein zugehöriges Antriebselement bereitzustellen, die gute Eigenschaften hinsichtlich Führbarkeit und Zentrierbarkeit der Schraube haben und eine wirkungsvolle Kraftübertragung zwischen Schraube und Antriebselement bieten.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß einem Ausführungsbeispiel eines ersten Aspekts der vorliegenden Erfindung ist eine Schraube zum Einbringen in einen Untergrund geschaffen, aufweisend einen Schraubenschaft, und einen sich an den Schraubenschaft anschließenden Schraubenkopf, in dem ein Antrieb zum Drehantreiben der Schraube mittels eines Antriebselements ausgebildet ist, wobei der Antrieb einen schraubenaußenseitigen Hohlflügelabschnitt mit kreisförmigem Hohlkern und entlang des Kreisumfangs vorgesehenen Hohlflügeln aufweist, wobei die Hohlflügel sich ausgehend von dem Kreisumfang bis hin zu einer radial äußersten Position hin erstrecken, an der die Hohlflügel entsprechend einem Hohlflügelaußenradius kreisförmig geformt sind, wobei der Antrieb einen schraubeninnenseitigen Hohlvertiefungsabschnitt aufweist, und wobei der Antrieb an einem axialen Übergang zwischen dem Hohlflügelabschnitt und dem Hohlvertiefungsabschnitt eine kreisförmige Abrundung entsprechend einem Hohlverrundungsradius aufweist, und wobei der Hohlverrundungsradius zwischen 50 % und 150 % des Hohlflügelaußenradius beträgt.

Gemäß einem anderen Ausführungsbeispiel des ersten Aspekts der vorliegenden Erfindung ist ein Verfahren zum Herstellen einer Schraube zum Einbringen in einen Untergrund bereitgestellt, wobei das Verfahren ein Ausbilden eines Schraubenschafts und eines sich an den Schraubenschaft anschließenden Schraubenkopfs, ein Ausbilden eines Antriebs in dem Schraubenkopf zum Drehantreiben der Schraube mittels eines Antriebselements, ein Ausbilden eines schraubenaußenseitigen Hohlflügelabschnitts des Antriebs mit kreisförmigem Hohlkern und entlang des Kreisumfangs vorgesehenen Hohlflügeln, wobei die Hohlflügel so ausgebildet werden, dass sie sich ausgehend von dem Kreisumfang bis hin zu einer radial äußersten Position hin erstrecken, an der die Hohlflügel entsprechend einem Hohlflügelaußenradius kreisförmig geformt sind, ein Ausbilden des Antriebs mit einem schraubeninnenseitigen Hohlvertiefungsabschnitt, und ein Ausbilden des Antriebs mit einer kreisförmigem Abrundung an einem axialen Übergang zwischen dem Hohlflügelabschnitt und dem Hohlvertiefungsabschnitt entsprechend einem Hohlverrundungsradius aufweist, der zwischen 50 % und 150 % des Hohlflügelaußenradius beträgt.

Gemäß einem weiteren Ausführungsbeispiel des ersten Aspekts der vorliegenden Erfindung ist ein Antriebselement zum Drehantreiben einer Schraube zum Einbringen in einen Untergrund bereitgestellt, wobei das Antriebselement einen Flügelabschnitt mit kreisförmigem Kern und entlang des Kreisumfangs vorgesehenen Flügeln, wobei die Flügel sich ausgehend von dem Kreisumfang bis hin zu einer radial äußersten Position hin erstrecken, an der die Flügel entsprechend einem Flügelaußenradius kreisförmig geformt sind, und einen endseitigen Vertiefungsabschnitt aufweist, wobei ein axialer Übergang zwischen dem Flügelabschnitt und dem Vertiefungsabschnitt eine kreisförmige Abrundung entsprechend einem Verrundungsradius aufweist, und wobei der Verrundungsradius zwischen 50 % und 150 % des Flügelaußenradius beträgt.

Gemäß einem weiteren Ausführungsbeispiel des ersten Aspekts der vorliegenden Erfindung ist ein Verfahren zum Herstellen eines Antriebselements zum Drehantreiben einer Schraube zum Einbringen in einen Untergrund bereitgestellt, wobei das Verfahren ein Ausbilden eines Flügelabschnitts mit kreisförmigem Kern und entlang des Kreisumfangs vorgesehenen Flügeln, wobei die Flügel so ausgebildet werden, dass sie sich ausgehend von dem Kreisumfang bis hin zu einer radial äußersten Position hin erstrecken, an der die Flügel entsprechend einem Flügelaußenradius kreisförmig geformt sind, ein Ausbilden eines endseitigen Vertiefungsabschnitts, und ein Ausbilden einer kreisförmigen Abrundung an einem axialen Übergang zwischen dem Flügelabschnitt und dem Vertiefungsabschnitt entsprechend einem Verrundungsradius aufweist, der zwischen 50 % und 150 % des Flügelaußenradius beträgt.

Gemäß einem Ausführungsbeispiel eines zweiten Aspekts der vorliegenden Erfindung ist eine Schraube zum Einbringen in einen Untergrund bereitgestellt, wobei die Schraube einen Schraubenschaft und einen sich an den Schraubenschaft anschließenden Schraubenkopf aufweist, in dem ein Antrieb zum Drehantreiben der Schraube mittels eines Antriebselements ausgebildet ist, wobei der Antrieb einen schraubenaußenseitigen Hohlflügelabschnitt mit kreisförmigem Hohlkern und entlang des Kreisumfangs vorgesehenen Hohlflügeln aufweist, wobei der Antrieb einen schraubeninnenseitigen Hohlvertiefungsabschnitt aufweist, und wobei der Hohlvertiefungsabschnitt mindestens eine Welle aufweist, insbesondere eine Mehrzahl von in Umfangsrichtung angeordnete Wellen aufweist.

Gemäß einem anderen Ausführungsbeispiel des zweiten Aspekts der vorliegenden Erfindung ist ein Antriebselement zum Drehantreiben einer Schraube bereitgestellt, wobei das Antriebselement einen Flügelabschnitt mit kreisförmigem Kern und entlang des Kreisumfangs vorgesehenen Flügeln und einen endseitigen Vertiefungsabschnitt aufweist, und wobei der Vertiefungsabschnitt mindestens eine Welle aufweist (insbesondere eine Mehrzahl von in Umfangsrichtung angeordnete Wellen aufweist).

Gemäß einem anderen Ausführungsbeispiel des ersten Aspekts bzw. des zweiten Aspekts der vorliegenden Erfindung ist eine Anordnung zum Einbringen einer Schraube in einen Untergrund geschaffen, wobei die Anordnung die Schraube mit den oben beschriebenen Merkmalen und ein Antriebselement mit den oben beschriebenen Merkmalen zum Drehantreiben der Schraube zum Einbringen der Schraube in den Untergrund aufweist (wobei das Antriebselement und der Antrieb der Schraube zueinander mit im Wesentlichen inverser Form ausgebildet sein können und bis auf ein technisch bedingtes Spiel bzw. eine herstellungsbedingte Toleranz im Wesentlichen gleiche Dimensionen aufweisen können).

Im Rahmen dieser Anmeldung kann unter dem Begriff "schraubenaußenseitiger Hohlflügelabschnitt" insbesondere ein Hohlraumabschnitt des Antriebs der Schraube verstanden werden, der in Umfangsrichtung mehrere Hohlflügel aufweist und von einem Antriebselement als erstes ausgefüllt wird, wenn das Antriebselement in den Antrieb der Schraube eingeführt wird. Im Rahmen dieser Anmeldung kann unter dem Begriff "Flügelabschnitt" in entsprechender Weise insbesondere ein Abschnitt des Antriebselements verstanden werden, das in Umfangsrichtung mehrere Flügel aufweist. Hohlflügelabschnitt und Flügelabschnitt können so ausgebildet sein, dass im Betrieb der Anordnung der Flügelabschnitt in den Hohlflügelabschnitt eingreift und die Hohlflügel durch die Flügel zur Drehmomentübertragung kraftschlüssig in Eingriff genommen werden. Hohlflügelabschnitt bzw. Flügelabschnitt können zum Beispiel eine im Wesentlichen zylindrische Gestalt aufweisen, d.h. in Eindringrichtung des Antriebselements eine im Wesentlichen konstante Querschnittsform aufweisen. Hiervon sind jedoch gewisse Abweichungen möglich: Zum Beispiel können sich Flächen zwischen benachbarten Flügeln bzw. zwischen benachbarten Hohlflügeln ins Schraubeninnere bzw. zum Ende des Antriebselements hin verjüngen, wohingegen die Flügel bzw. Hohlflügel sich senkrecht ins Schraubeninnere bzw. zum Ende des Antriebselements hin erstrecken können.

Im Rahmen dieser Anmeldung kann unter dem Begriff "schraubeninnenseitiger Hohlvertiefungsabschnitt" insbesondere ein Hohlraumabschnitt des Antriebs der Schraube verstanden werden, der im Vergleich zum Hohlflügelabschnitt tiefer im Inneren des Antriebs der Schraube angeordnet ist und vorzugsweise einen Bodenbereich des Antriebs der Schraube bildet. Der Hohlvertiefungsabschnitt wird beim Einführen des Antriebselements in den Antrieb der Schraube von dem Antriebselement erst dann ausgefüllt, nachdem das Antriebselement in den Hohlflügelabschnitt eingedrungen ist. Im Rahmen dieser Anmeldung kann unter dem Begriff "Vertiefungsabschnitt" in entsprechender Weise insbesondere ein Abschnitt des Antriebselements verstanden werden, der im Betrieb der Anordnung im Vergleich zum Flügelabschnitt tiefer in das Innere des Antriebs der Schraube eindringt und vorzugsweise einen Endbereich des Antriebselements bildet. Hohlvertiefungsabschnitt und/oder Vertiefungsabschnitt können zum Beispiel eine im Wesentlichen konische Gestalt aufweisen, die zum Beispiel eine glatte Oberfläche haben kann oder auf die Wellen angeformt sein können.

Im Rahmen dieser Anmeldung kann unter dem Begriff "Flügel" insbesondere jede Kontur, jedes Formmerkmal, jedes Profil und jede strukturelle Diskontinuität am radialen Außenbereich eines ansonsten kreisrunden Querschnitts eines Antriebselements zum Drehantreiben einer Schraube verstanden werden, die/das eine von der Kreisform bzw. Zylinderform abweichende Außenkontur des Antriebselements bildet. Im Rahmen dieser Anmeldung kann in entsprechender Weise unter dem Begriff "Hohlflügel" insbesondere jede Kontur, jedes Formmerkmal, jedes Profil und jede strukturelle Diskontinuität am radialen Außenbereich eines ansonsten kreisrunden Querschnitts eines Antriebs einer Schraube verstanden werden, die/das eine von der Kreisform bzw. Zylinderform abweichende Innenkontur des Antriebs im Schraubenkopf bildet. Solche Flügel bzw. Hohlflügel können als zumindest abschnittsweise runde (zum Beispiel halbkreisförmige) Aus- bzw. Einbuchtungen ausgebildet sein und um den Kreisumfang herum symmetrisch oder asymmetrisch angeordnet sein, insbesondere äquidistant zueinander. Zum Beispiel können zwei gegenüberliegende Hohlflügel des Antriebs einen Längsschlitz bilden, können vier sich paarweise gegenüberliegende Hohlflügel ein Kreuzschlitz bilden oder können sechs umfänglich verteilte und zumindest abschnittsweise runde Hohlflügel einen Innensechsrund bilden. Entsprechend können zwei gegenüberliegende Flügel des Antriebselements einen schlitzförmigen Längskörper bilden, können vier gegenüberliegende Flügel einen Kreuzkörper bilden oder können sechs umfänglich verteilte und zumindest abschnittsweise runde Flügel einen Innensechsrundkörper bilden.

Im Rahmen dieser Anmeldung kann unter dem Begriff "Hohlflügelaußenradius" insbesondere ein Radius eines zumindest abschnittsweise kreisförmigen Hohlflügels am Außenumfang des Antriebs verstanden werden, und zwar in Blickrichtung entlang der Schraubenachse, die entlang dem Schraubenschaft verläuft. Im Rahmen dieser Anmeldung kann unter dem Begriff "Flügelaußenradius" in entsprechender Weise insbesondere ein Radius eines zumindest abschnittsweise kreisförmigen Flügels am Außenumfang des Antriebselements verstanden werden, und zwar in Blickrichtung entlang einer Einführrichtung, entlang welcher das Antriebselement im Betrieb in den Antrieb der Schraube eingeführt wird.

Im Rahmen dieser Anmeldung kann unter dem Begriff "Hohlverrundungsradius" insbesondere ein Radius eines zumindest abschnittsweise kreisförmigen Übergangs zwischen Hohlflügelabschnitt und Hohlvertiefungsabschnitt des Antriebs verstanden werden, und zwar in Blickrichtung senkrecht zur Schraubenachse, die entlang dem Schraubenschaft verläuft. Im Rahmen dieser Anmeldung kann unter dem Begriff "Verrundungsradius" in entsprechender Weise insbesondere ein Radius eines zumindest abschnittsweise kreisförmigen Übergangs zwischen Flügelabschnitt und Vertiefungsabschnitt des Antriebselements verstanden werden, und zwar in Blickrichtung senkrecht zu einer Einführrichtung, entlang welcher das Antriebselement im Betrieb in den Antrieb der Schraube eingeführt wird.

Im Rahmen dieser Anmeldung kann unter dem Begriff "Wellen" insbesondere jede in Umfangsrichtung von Hohlvertiefungsabschnitt der Schraube bzw. Vertiefungsabschnitt des Antriebselements verlaufende alternierende Abfolge von Erhebungen und Vertiefungen verstanden werden, die zu einer Profilierung in Umfangsrichtung führen. Bevorzugt erfolgt eine solche Profilierung in Umfangsrichtung. Anders ausgedrückt können die Wellentäler und Wellenberge entlang einer Verjüngungsrichtung von Hohlvertiefungsabschnitt bzw. Vertiefungsabschnitt stetig und in Umfangsrichtung von Hohlvertiefungsabschnitt bzw. Vertiefungsabschnitt unter Wellenbildung unstetig ausgebildet sein.

Gemäß einem Ausführungsbeispiel des ersten Aspekts der vorliegenden Erfindung ist es durch das Vorsehen einer kreisförmigen Abrundung am axialen Übergang zwischen Hohlflügelabschnitt und Hohlvertiefungsabschnitt der Schraube bzw. zwischen Flügelabschnitt und Vertiefungsabschnitt des Antriebselements möglich, einen Materialfluss beim Herstellen der Schraube (insbesondere bei der Umformung des Antriebs) bzw. des Antriebselements entlang einer gewünschten Richtung zu begünstigen, wenn der Radius der genannten Abrundung nicht mehr als etwa ±50 % vom Radius der Hohlflügel bzw. Flügel im radialen Außenbereich abweicht. Anschaulich kann bei einer solchen Geometrie erreicht werden, dass der Materialfluss beim Herstellen beispielsweise des Antriebselements maßgeblich auch in Hohlräume zwischen den Flügeln hinein erfolgt und weniger nach außen abgeleitet wird. Durch die Abrundung in Kombination mit der genannten Beziehung zwischen den Rundungsradien wird durch diese Einstellung der Materialflusseigenschaften eine unerwünschte Faltenbildung an Schraube bzw. Antriebselement vermieden, sodass im Betrieb das Antriebselement besser an der Innenfläche des Antriebs der Schraube anliegt. Dies führt zu einer Standzeiterhöhung von Antriebselement und Schraube und ermöglicht eine besonders gute Kraftübertragung. Ferner verbessert die reduzierte Faltenbildung auch die Führbarkeit und die Zentrierbarkeit des Antriebselements in der Schraube und fördert eine wirkungsvolle Kraftübertragung zwischen Schraube und Antriebselement.

Gemäß einem Ausführungsbeispiel des zweiten Aspekts der vorliegenden Erfindung ist es durch das Vorsehen von in Umfangsrichtung oszillierenden und zum Antriebsinnersten der Schraube bzw. zur Endspitze des Antriebselements hin radial und axial zulaufenden Wellen möglich, zusätzliche zusammenwirkende Antriebsflächen im Hohlvertiefungsabschnitt bzw. Vertiefungsabschnitt auszubilden. Anschaulich erfolgt eine Drehmomentübertragung dann nicht nur zwischen Hohlflügeln und Flügeln sondern zusätzlich auch zwischen korrespondierenden Wellenbergen und Wellentälern im Hohlvertiefungsabschnitt der Schraube bzw. im Vertiefungsabschnitt des Antriebselements. Eine unerwünschte Neigung des Antriebselements, aus dem Antrieb der Schraube herauszugleiten, kann dadurch wirksam unterdrückt werden. Anschaulich bewirken die korrespondierenden Wellen im Antriebstiefsten der Schraube und im Endabschnitt des Antriebselements eine Zwangsführung, die eine Zentrierung und Findung zwischen Antriebselement und Schraube begünstigt und somit zu einer besonders guten Kraftübertragung vom Antriebselement zur Schraube führt. Die Bereitstellung zusätzlicher Kraftübertragungsflächen verbessert somit die Führbarkeit und die Zentrierbarkeit des Antriebselements in der Schraube und fördert eine wirkungsvolle Kraftübertragung zwischen Schraube und Antriebselement.

Ein Fachmann wird verstehen, dass Ausführungsbeispiele gemäß dem ersten Aspekt der Erfindung beliebig mit Ausführungsbeispielen gemäß dem zweiten Aspekt der Erfindung kombiniert werden können oder davon getrennt vorgesehen werden können.

Im Weiteren werden zusätzliche exemplarische Ausführungsbeispiele der Schrauben, der Antriebselemente, der Herstellungsverfahren und der Anordnung beschrieben.

Gemäß einem exemplarischen Ausführungsbeispiel kann die Schraube derart ausgebildet sein, dass ein Materialfluss beim Herstellen der Schraube auch oder sogar bevorzugt in Seitenflächen zwischen den Hohlflügeln hinein erfolgt. In entsprechender Weise kann das Antriebselement derart ausgebildet sein, dass ein Materialfluss beim Herstellen des Antriebselements auch oder sogar überwiegend in Bereiche zwischen den Flügeln hinein erfolgt. Anschaulich kann durch eine entsprechende Konfiguration der Abrundung zwischen Hohlflügelabschnitt und Hohlvertiefungsabschnitt der Schraube bzw. Flügelabschnitt und Vertiefungsabschnitt des Antriebselements im Verhältnis zur Rundung der Flügel bzw. Hohlflügel ein Materialfluss in Seitenflächen zwischen die Flügel bzw. Hohlflügel umgeleitet werden. Dies führt zu einer höheren Standzeit von Antriebselement und Schraube, da eine präzisere und artefaktärmere Herstellung von Schraube und Antriebselement ohne unerwünschte Faltenbildung durch parasitären Materialfluss in unerwünschte Gebiete erreicht werden kann. Ferner kann dadurch erreicht werden, dass das Herstellungswerkzeug für Schraube bzw. Antriebselement länger hält.

Gemäß einem exemplarischen Ausführungsbeispiel kann der Hohlverrundungsradius zwischen 80 % und 120 %, insbesondere zwischen 90 % und 110 %, des Hohlflügelaußenradius betragen. In entsprechender Weise kann der Verrundungsradius zwischen 80 % und 120 %, insbesondere zwischen 90 % und 110 %, des Flügelaußenradius betragen. Es hat sich gezeigt, dass eine noch geringere Abweichung der beiden Radien von maximal ±20 % (und weiter bevorzugt von maximal ±10 %) eine noch bessere Kontrolle des Materialflusses ermöglicht und daher die Herstellung von Schraube bzw. Antriebselement mit noch präziser definierten Eigenschaften erlaubt.

Gemäß einem exemplarischen Ausführungsbeispiel können der Hohlverrundungsradius und der Hohlflügelaußenradius gleich sein. In entsprechender Weise können der Verrundungsradius und der Flügelaußenradius gleich sein. Beste Ergebnisse hinsichtlich der Präzision von Schraube und Antriebselement mit den entsprechend vorteilhaften Wirkungen hinsichtlich Führbarkeit, Zentrierbarkeit und Kraftübertragung zwischen Antriebselement und Schraube können erreicht werden, wenn die beiden Radien am Übergang, d.h. in Umfangsrichtung und in axialer Richtung, identisch sind. Anschaulich bietet der Übergang dann einen besonders geringen Fließwiderstand für Material beim Herstellungsprozess und begünstigt daher einen Materialfluss zumindest auch in die Seitenwände zwischen die Flügel hinein.

Gemäß einem exemplarischen Ausführungsbeispiel können der Hohlverrundungsradius und der Hohlflügelaußenradius einen Hohlkugelabschnitt bilden. In entsprechender Weise können der Verrundungsradius und der Flügelaußenradius einen Kugelabschnitt bilden. Mit anderen Worten kann die Abrundung so ausgebildet sein, dass sich abschnittsweise eine Kugelform am jeweiligen Übergang ergibt. Dies fördert einen kontrollierbaren und vorteilhaften Materialfluss beim Herstellungsprozess und somit die Präzision und Qualität der hergestellten Schraube bzw. des hergestellten Antriebselements.

Besonders bevorzugt ist es, wenn die Abrundung im Übergangsbereich zwischen Hohlflügelabschnitt und Hohlvertiefungsabschnitt der Schraube bzw. im Übergangsbereich zwischen Flügelabschnitt und Vertiefungsabschnitt des Antriebselements die Form einer Kofferecke aufweist. Die geometrische Form einer Kofferecke kann erhalten werden, wenn Kanten mit vorzugsweise gleichem Radius verrundet werden. Bei gleichen Radien kann die Ecke also mit einem Kugelsegment versehen werden. Anders ausgedrückt verbindet eine geometrische Kofferecken-Funktion sich schneidende Rundungsflächen unter Erzeugung einer tangentenstetigen oder sogar krümmungsstetigen Übergangsfläche zwischen den sich treffenden abgerundeten Kanten.

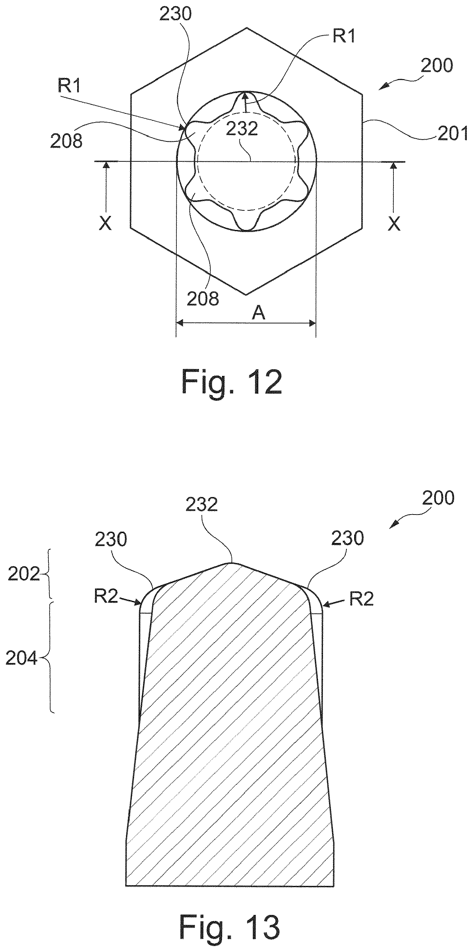

Gemäß einem exemplarischen Ausführungsbeispiel kann der Hohlflügelaußenradius zwischen 0,2 mm und 0,9 mm, insbesondere zwischen 0,3 mm und 0,6 mm, betragen und/oder kann der Hohlverrundungsradius zwischen 0,2 mm und 0,9 mm, insbesondere zwischen 0,3 mm und 0,6 mm, betragen. In entsprechender Weise kann der Flügelaußenradius zwischen 0,2 mm und 0,9 mm, insbesondere zwischen 0,3 mm und 0,6 mm, betragen und/oder kann der Verrundungsradius zwischen 0,2 mm und 0,9 mm, insbesondere zwischen 0,3 mm und 0,6 mm, betragen. Die genannten Radien sollte nicht zu klein werden, um keinen zu scharfen Übergang in axialer Richtung zu generieren. Gleichzeitig sollten die genannten Radien vorzugsweise auch nicht zu groß werden, um dennoch einen definierten Übergang zwischen Hohlflügelabschnitt und Hohlvertiefungsabschnitt der Schraube bzw. Flügelabschnitt und Vertiefungsabschnitt des Antriebselements zu bilden. Die genannten Wertebereiche haben sich in Hinblick auf beide Kriterien als besonders geeignet erwiesen, insbesondere wenn ein maximaler Außendurchmesser des Hohlflügelabschnitts bzw. des Flügelabschnitts zwischen 3 mm und 7 mm beträgt (vergleiche Figur 12). Insbesondere kann gemäß einem exemplarischen Ausführungsbeispiel aus den genannten Gründen ein Verhältnis zwischen dem Hohlflügelaußenradius und dem Außendurchmesser des Hohlflügelabschnitts in einem Bereich zwischen 0,03 und 0,11, insbesondere in einem Bereich zwischen 0,070 und 0,084, liegen. In entsprechender Weise kann mit Vorteil ein Verhältnis zwischen dem Flügelaußenradius und einem maximalen Außendurchmesser des Flügelabschnitts in einem Bereich zwischen 0,03 und 0,11, insbesondere in einem Bereich zwischen 0,070 und 0,084 liegen.

Gemäß einem exemplarischen Ausführungsbeispiel kann eine Endspitze des Hohlvertiefungsabschnitts abgerundet sein. In entsprechender Weise kann eine Endspitze des Vertiefungsabschnitts abgerundet sein. Diese Abrundung der Endspitzen von Hohlvertiefungsabschnitt und Vertiefungsabschnitt, die sich im Betrieb der Anordnung berühren können, erleichtert eine Selbstfindung von Schraube und Antriebselement bei einer leichten Versetzung zwischen Antriebselement und Schraube.

Gemäß einem exemplarischen Ausführungsbeispiel kann der Hohlvertiefungsabschnitt mindestens eine Welle aufweisen, insbesondere eine Mehrzahl von in Umfangsrichtung angeordnete Wellen aufweisen. In entsprechender Weise kann der Vertiefungsabschnitt mindestens eine Welle aufweisen, insbesondere eine Mehrzahl von in Umfangsrichtung angeordnete Wellen aufweisen. Anschaulich können diese Wellen am Hohlvertiefungsabschnitt und/oder am Vertiefungsabschnitt ein (insbesondere konisches) Wellendach bilden. Bei einem solchen Wellendach können sich die Radien kontinuierlich ändern. Durch Ausbilden einer Wellenform in Umfangsrichtung am Hohlvertiefungsabschnitt bzw. Vertiefungsabschnitt wird eine zusätzliche Antriebsfläche zwischen Antriebselement und Schraube geschaffen. Im Betrieb können wellenartige Erhöhungen des Antriebselements in wellenartige Vertiefungen der Schraube eingreifen und umgekehrt. Dadurch wird die Kraftübertragung zwischen Antriebselement und Schraube verbessert. Ferner kann ein unerwünschtes Herausgleiten des Antriebselements aus dem Antrieb der Schraube durch das zylindrische Profil unterdrückt werden.

Gemäß einem exemplarischen Ausführungsbeispiel des ersten Aspekts bzw. des zweiten Aspekts der Erfindung können die Wellen in Verlängerung der Hohlflügel sich bis zu einer Endspitze des Hohlvertiefungsabschnitts erstreckende konkave Abschnitte (anschaulich Vertiefungen) aufweisen, zwischen denen sich bis zu der Endspitze des Hohlvertiefungsabschnitts erstreckende konvexe Abschnitte (anschaulich Erhöhungen) gebildet sind. In entsprechender Weise können bei dem Antriebselement die Wellen in Verlängerung der Flügel sich bis zu einer Endspitze des Vertiefungsabschnitts erstreckende konvexe Abschnitte aufweisen, zwischen denen sich bis zu der Endspitze des Vertiefungsabschnitts erstreckende konkave Abschnitte gebildet sind. Durch Eingreifen der konvexen Abschnitte des Antriebselements in konkave Abschnitte der Schraube und der konvexen Abschnitte der Schraube in konkave Abschnitte des Antriebselements kann eine umfänglich hochwirksame Kraftkopplung zwischen Antriebselement und Schraube gefördert werden.

Gemäß einem exemplarischen Ausführungsbeispiel können bei der Schraube die Wellen des Hohlvertiefungsabschnitts am Übergang zu den Hohlflügeln die Abrundung aufweisen. In entsprechender Weise können bei dem Antriebselement die Wellen des Vertiefungsabschnitts am Übergang zu den Flügeln die Abrundung aufweisen. Anschaulich können bei der Schraube die Hohlflügel mittels der Abrundung stetig in Vertiefungen der in Umfangsrichtung oszillierenden Wellen des Hohlvertiefungsabschnitts übergehen. Korrespondierend können bei dem Antriebselement die Flügel mittels der Abrundung stetig in Erhebungen der in Umfangsrichtung oszillierenden Wellen des Vertiefungsabschnitts übergehen. Dadurch wird ein Einführen des Antriebselements in den Antrieb der Schraube erleichtert. Diese Einführbarkeit kann weiter erleichtert werden, wenn bei der Schraube auch Bereiche zwischen Hohlflügeln mittels einer Abrundung stetig in Erhebungen der in Umfangsrichtung oszillierenden Wellen des Hohlvertiefungsabschnitts übergehen, und/oder bei dem Antriebselement auch Bereiche zwischen Flügeln mittels einer Abrundung stetig in Vertiefungen der in Umfangsrichtung oszillierenden Wellen des Vertiefungsabschnitts übergehen.

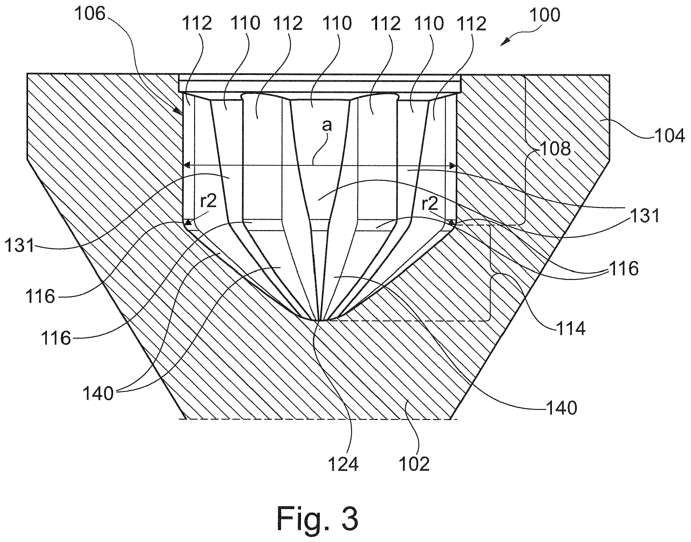

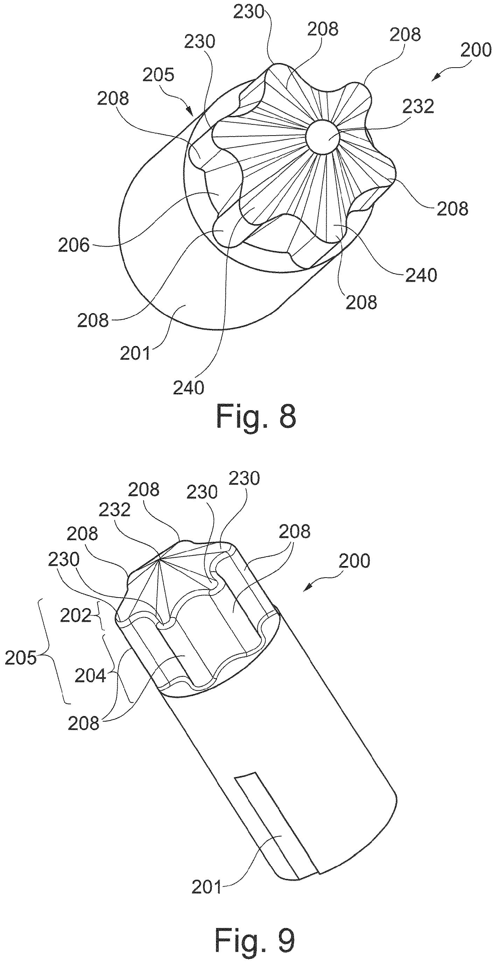

Gemäß einem exemplarischen Ausführungsbeispiel der Schraube können die Wellen schiffsbugförmig ausgebildet sein. In entsprechender Weise können bei dem Antriebselement die Wellen schiffsbugförmig ausgebildet sein. Eine Schiffsbugform ist für die Schraube zum Beispiel in Figur 3 und für das Antriebselement zum Beispiel in Figur 8 dargestellt und führt zu einer besonders guten Kraftübertragung zwischen Antriebselement und Schraube.

Gemäß einem alternativen exemplarischen Ausführungsbeispiel der Schraube ohne Wellen kann der Hohlvertiefungsabschnitt ein Hohlkegelabschnitt mit glatter Oberfläche sein. Eine solche Geometrie ist besonders einfach herstellbar. Durch das Vorsehen einer Abrundung zwischen Hohlflügelabschnitt und Hohlvertiefungsabschnitt (bzw. Flügelabschnitt und Vertiefungsabschnitt) kann auch bei einem wellenfreien oder sogar glatten Hohlvertiefungsabschnitt eine vorteilhafte Materialumlenkung beim Herstellen der Schraube (bzw. in entsprechender Weise des Antriebselements) in der oben beschriebenen Weise erreicht werden.

Gemäß einem exemplarischen Ausführungsbeispiel können Ausläufer der Hohlflügel sich bis in den Bereich der Abrundung hinein erstrecken. In entsprechender Weise können Ausläufer der Flügel sich bei dem Antriebselement bis in den Bereich des Übergangs hinein erstrecken. Insbesondere können Hohlflügel stetig in Vertiefungen der Wellen und Flügel stetig in Erhebungen der Wellen übergehen. Dies fördert weiter eine gute Führbarkeit und Zentrierbarkeit sowie wirksame Kraftübertragung zwischen Antriebselement und Schraube.

Gemäß einem exemplarischen Ausführungsbeispiel kann die Schraube als Innensechsrund mit sechs umfänglich verteilten Hohlflügeln ausgebildet sein. Somit können entlang des Kreisumfangs der Schraube sechs Hohlflügel angeordnet sein (alternativ sind aber zum Beispiel auch vier oder acht entlang des Kreisumfangs angeordnete Hohlflügel möglich). In entsprechender Weise können bei dem Antriebselement entlang des Kreisumfangs sechs Flügel angeordnet sein, oder zum Beispiel auch vier oder acht Flügel. Die resultierende Form an der Außenseite des Antriebs und an einer korrespondierenden Stelle des Antriebselements kann dann zum Beispiel einem Innensechsrund bzw. einer Torx®-Geometrie entsprechen. Andere Formen sind jedoch möglich, zum Beispiel ein Kreuzschlitz, etc.

Gemäß einem exemplarischen Ausführungsbeispiel kann der Schraubenkopf ein Senkkopf oder Linsenkopf sein. Ausführungsbeispiele der Erfindung sind daher mit unterschiedlichen Schraubengeometrien kompatibel.

Gemäß einem exemplarischen Ausführungsbeispiel kann der Hohlvertiefungsabschnitt bzw. der Vertiefungsabschnitt als Kegelabschnitt ausgebildet sein. Insbesondere bei Vorsehen einer Welle sind Abweichungen von einer exakten Kegelgeometrie möglich. Es ist aber auch bei Vorsehen mindestens einer Welle vorteilhaft, wenn der Hohlvertiefungsabschnitt bzw. der Vertiefungsabschnitt verjüngend geformt ist.

Gemäß einem exemplarischen Ausführungsbeispiel der Anordnung können die Schraube und das Antriebselement derart ausgebildet sein, dass nach Einführen des Antriebselements in den Antrieb der Schraube im Wesentlichen kein Freiraum zwischen dem Antriebselement und der Schraube im Antrieb verbleibt. Insbesondere kann im Betrieb der Anordnung zwischen dem Hohlvertiefungsabschnitt der Schraube und dem Vertiefungsabschnitt des Antriebselements ein Berührkontakt ermöglicht werden, der mit Vorteil eine zusätzliche Kraftübertragung auch zwischen Hohlvertiefungsabschnitt und Vertiefungsabschnitt durch das Schaffen zusätzlicher, miteinander zusammenwirkender Führungsflächen ermöglicht.

Gemäß einem exemplarischen Ausführungsbeispiel kann der Antrieb ein zylindrischer Antrieb sein. Beispielsweise kann dies ein Torx-Antrieb oder ein AW-Antrieb sein.

Allerdings kann bei einem anderen Ausführungsbeispiel ein Antrieb gebildet sein, bei dem die Hohlflügel entlang des Hohlflügelabschnitts einen durchgehend konstanten Außendurchmesser haben und der Hohlkern des Hohlflügelabschnitts sich entlang des Hohlflügelabschnitts durchgehend verjüngt.

Gemäß einem exemplarischen Ausführungsbeispiel der Schraube können - entlang der Schraubenachse - die Hohlflügel von einem schraubenaußenseitigen Ende des Hohlflügelabschnitts bis zu der kreisförmigen Abrundung am Übergang zum Hohlvertiefungsabschnitt einen konstanten bzw. gleichbleibenden Außendurchmesser haben. In entsprechender Weise können bei dem Antriebselement - entlang der Drehachse des Antriebselements - die Flügel von einem dem Antrieb der Schraube im Drehbetrieb abgewandten Ende des Flügelabschnitts bis zu der kreisförmigen Abrundung am Übergang zum Vertiefungsabschnitt einen konstanten bzw. gleichbleibenden Außendurchmesser haben. Dadurch ist eine effiziente Kraftübertragung von den Flügeln auf die profilierte Wandung der Schraube angrenzend an die Hohlflügelabschnitte gewährleistet, indem in axialer Richtung eine durchgehend große Kontaktfläche zwischen Hohlflügeln und Flügeln bereitgestellt wird.

Gemäß einem exemplarischen Ausführungsbeispiel der Schraube kann der Hohlkern des Hohlflügelabschnitts sich zum Boden des Antriebs hin, insbesondere konisch, verjüngen. In entsprechender Weise kann bei dem Antriebselement der Kern des Flügelabschnitts sich zum Vertiefungsabschnitt hin, insbesondere konisch, verjüngen. Eine solche konische Verjüngung gewährleistet eine automatische Selbstzentrierung bzw. Selbstführung des Antriebselement beim Einführen in den Antrieb des Schraubenkopfs.

Gemäß einem exemplarischen Ausführungsbeispiel kann die Schraube, insbesondere eine Holzschraube oder eine Metallbohrschraube, als selbstbohrende (d.h. sich vorbohrungsfrei ein Loch in dem Untergrund bohrende) und/oder selbstschneidende (d.h. sich mit oder ohne Vorbohrung ein Gewinde in dem Untergrund schneidende) Schraube ausgebildet sein. Besonders bei solchen Schrauben sind die Anforderungen an die Führbarkeit und Zentrierbarkeit beim Selbstbohren bzw. Selbstschneiden besonders wichtig und die erfindungsgemäßen Maßnahmen somit besonders wirkungsvoll.

Gemäß einem exemplarischen Ausführungsbeispiel kann das Antriebselement als Bit ausgebildet sein. Unter einem Bit versteht man insbesondere eine auswechselbare Schraubendreherklinge ohne Griff für ein bestimmtes Schraubenkopfprofil. Die zum Beispiel sechseckige Aufnahme kann so geformt sein, dass sie formschlüssig in einen entsprechend geformten Bithalter (zum Beispiel eines Handstücks eines Schraubendrehers oder eines Akkuschraubers) eingesetzt werden kann.

Gemäß einem anderen exemplarischen Ausführungsbeispiel kann das Antriebselement als Schraubenschlüssel ausgebildet sein. Ein Schraubenschlüssel kann als ein (zum Beispiel im Wesentlichen L-förmiges) Handwerkzeug zum Anziehen oder Lösen von Schrauben mit passendem Antriebsprofil bezeichnet werden. Ein solcher Schraubenschlüssel kann auf das Antriebsprofil in dem Schraubenkopf gesteckt und im Drehsinn betätigt werden.

Gemäß noch einem anderen exemplarischen Ausführungsbeispiel kann das Antriebselement als Schraubendreher mit einem von einem Benutzer drehbetätigbaren Handstück ausgebildet sein, welches Handstück sich an den Flügelabschnitt anschließt. Ein solcher Schraubendreher kann ein Werkzeug mit bestimmter Kopfform sein, mit dem Schrauben in Untergründe bzw. Werkstoffe hinein- oder herausgeschraubt werden.

Die beschriebene Architektur zum Ausbilden eines Antriebs für eine Schraube ist mit verschiedenartigen Schraubentypen sowie mit verschiedenartigen Schraubenkopfformen kompatibel. Als Schrauben können sowohl solche mit Vollgewinde oder Teilgewinde am Schraubenschaft oder auch Bohrschrauben verwendet werden. Besonders vorteilhaft ist die erfindungsgemäße Architektur für selbstbohrende Schrauben einsetzbar, da bei diesen eine zuverlässige Führung und Zentrierung beim Setzen besonders wichtig ist. Hinsichtlich der Kopfformen erfindungsgemäßer Schrauben können sowohl Senkkopfschrauben als auch solche mit Kopfformen wie die der AMO-Schraube oder der Assy-Schraube der Firma Würth eingesetzt werden. Mögliche Untergründe, in welche die Schraube eingebracht werden kann, sind Holz, Stein, Beton, Metall, etc.

Im Folgenden werden exemplarische Ausführungsbeispiele der vorliegenden Erfindung mit Verweis auf die folgenden Figuren detailliert beschrieben.
Figur 1 zeigt eine dreidimensionale Ansicht einer Schraube mit abgerundeten Hohlflügeln gemäß einem exemplarischen Ausführungsbeispiel der Erfindung.
Figur 2 zeigt eine andere dreidimensionale Ansicht der Schraube gemäß Figur 1.
Figur 3 zeigt einen Querschnitt der Schraube gemäß Figur 1.
Figur 4 zeigt eine Draufsicht eines Teils der Schraube gemäß Figur 1.
Figur 5 zeigt eine zusammenwirkende Anordnung aus der Schraube gemäß Figur 1 bis Figur 4 und einem in einen Antrieb der Schraube eingreifenden Antriebselement gemäß einem exemplarischen Ausführungsbeispiel der Erfindung.
Figur 6 zeigt eine Seitenansicht des Antriebselements gemäß Figur 5 mit wellenförmigem Endabschnitt gemäß einem exemplarischen Ausführungsbeispiel der Erfindung zum Zusammenwirken mit der korrespondierend invers geformten Schraube.
Figur 7 zeigt eine räumliche Ansicht des Antriebselements gemäß Figur 5 und Figur 6.
Figur 8 zeigt eine andere dreidimensionale Ansicht des Antriebselements gemäß Figur 5 bis Figur 7.
Figur 9 zeigt eine räumliche Ansicht eines Antriebselements gemäß einem anderen exemplarischen Ausführungsbeispiel der Erfindung mit glattem Vertiefungsabschnitt.
Figur 10 zeigt eine dreidimensionale Ansicht sowie eine Detailansicht des Antriebselements gemäß Figur 9 mit abgerundeten Flügeln zum Zusammenwirken mit einer korrespondierend invers geformten Schraube.
Figur 11 zeigt eine Seitenansicht des Antriebselements gemäß Figur 9 und Figur 10.
Figur 12 zeigt eine Draufsicht eines Antriebselements gemäß einem exemplarischen Ausführungsbeispiel der Erfindung
Figur 13 zeigt eine Querschnittsansicht des Antriebselements gemäß Figur 12.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte der Erfindung erläutert werden:

Gemäß einem exemplarischen Ausführungsbeispiel der Erfindung ist anschaulich ein Antrieb einer Schraube und korrespondierend ein die Schraube durch in Eingriff nehmen des Antriebs drehantreibendes Antriebselement mit abgerundeten Zähnen ausgebildet.

Bei einem herkömmlichen zylindrischen Antrieb, zum Beispiel einem AW-Antrieb, kann bei der Umformung des Antriebs in den Schraubenkopf ein Materialfluss durch die (insbesondere planar) umlaufende Fase an der Spitze des Antriebs nach Außen erzeugt werden. Anschaulich kann unter ungünstigen Umständen während des Herstellungsverfahrens das Material von der Außenkontur weggeleitet werden und kann zu einer unerwünschten Faltenbildung im Außenbereich führen.

Um die genannten unerwünschten Phänomene zumindest teilweise zu vermeiden, kann gemäß einem exemplarischen Ausführungsbeispiel der Erfindung eine Abrundung oder Abschrägung der Flügel am zylindrischen Antriebselement bzw. der Hohlflügel am Antrieb einer entsprechenden Schraube gebildet werden (zum Beispiel bei einem Torx-Antrieb oder einem AW-Antrieb). Gemäß einem exemplarischen Ausführungsbeispiel der Erfindung kann eine solche Abrundung oder Abschrägung der Übergänge einer Fase zu einer Außenkontur zu einem besseren Materialfluss führen, der weniger Material von der Außenkontur wegtransportiert als bei einer herkömmlichen Geometrie.

Gemäß einem anderen exemplarischen Ausführungsbeispiel der Erfindung, das mit dem zuvor beschriebenen Ausführungsbeispiel jedoch optional kombiniert werden kann, kann eine Kombination aus einem zum Beispiel zylindrischen Antrieb, wie zum Beispiel einem Torx-Antrieb oder ein AW-Antrieb, mit einem abgewinkeltem oder gerundeten Antrieb durchgeführt werden. Insbesondere können mit Vorteil die Radien der Hohlflügel bzw. Flügel und der entsprechenden Zwischenräume bis zur (vorzugsweise abgerundeten) Spitze der Schraube bzw. des Antriebselements zulaufend ausgebildet werden, um eine weitere Verbesserung im Materialfluss zu erreichen. Was noch schwerer wiegt, ist, dass bei Ausbilden des Hohlvertiefungsabschnitts der Schraube bzw. des Vertiefungsabschnitts des Antriebselements mit einer in Umfangsrichtung ondulierenden und vorzugsweise in axialer Richtung kontinuierlichen Wellenstruktur weitere Antriebsflächen erzeugt werden können, was die Führbarkeit, Zentrierbarkeit und Handhabbarkeit der Anordnung aus Schraube und Antriebselement gravierend verbessern kann.

Anschaulich kann durch diese Maßnahme auch eine Zwangsfindung des Antriebselements (insbesondere eines Bits) in der Schraube gefördert werden. Insbesondere können die sogenannten Come-Out Kräfte, die im Radienbereich entstehen können, reduziert oder sogar aufgehoben werden. Besonders durch eine Schiffsbugform der genannten Wellen kann ein besonders vorteilhafter Materialfluss gefördert werden und können Come-Out-Kräfte reduziert oder eliminiert werden. Anschaulich kann ein solches Ausführungsbeispiel als Hybrid-Antrieb aus einem zylindrischen Antrieb (zum Beispiel AW-Antrieb, Torx-Antrieb) und einem nicht zylindrischen Antrieb bezeichnet werden.

Wie bereits angesprochen, hat eine Schiffbug-Form bei dem Hohlvertiefungsabschnitt des Antriebs der Schraube und/oder bei einem korrespondierenden Werkzeug (insbesondere einem Bit, Schraubendreher, Akkuschrauber oder anderem Antriebselement) besonders ausgeprägte Vorteile. Insbesondere können mit Vorteil die entsprechenden Radien einer Schiffsbug-Form angenähert werden, um eine besonders wirksame Krafteinwirkung in Drehrichtung zu erreichen.

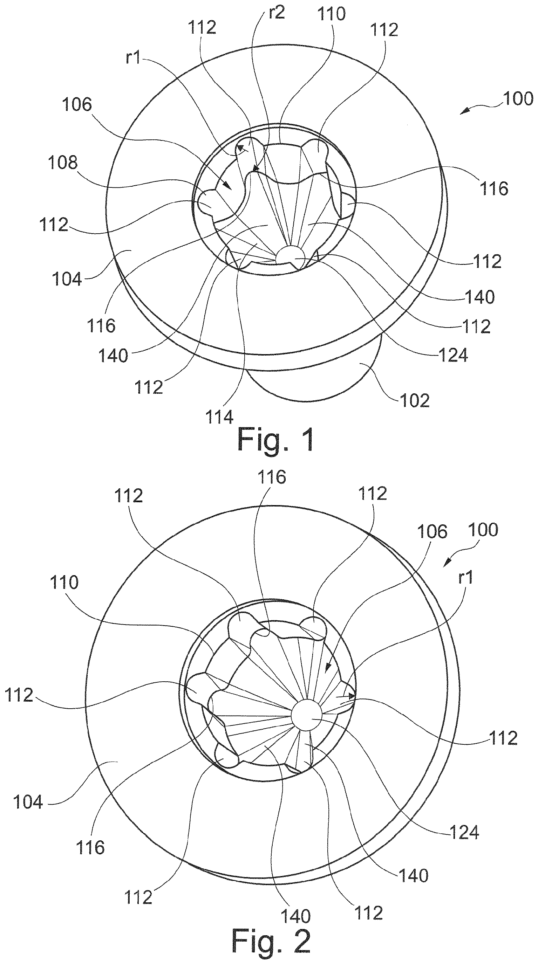

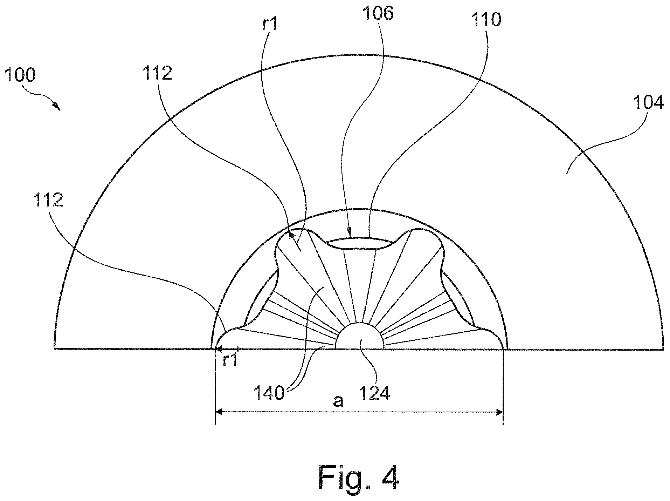

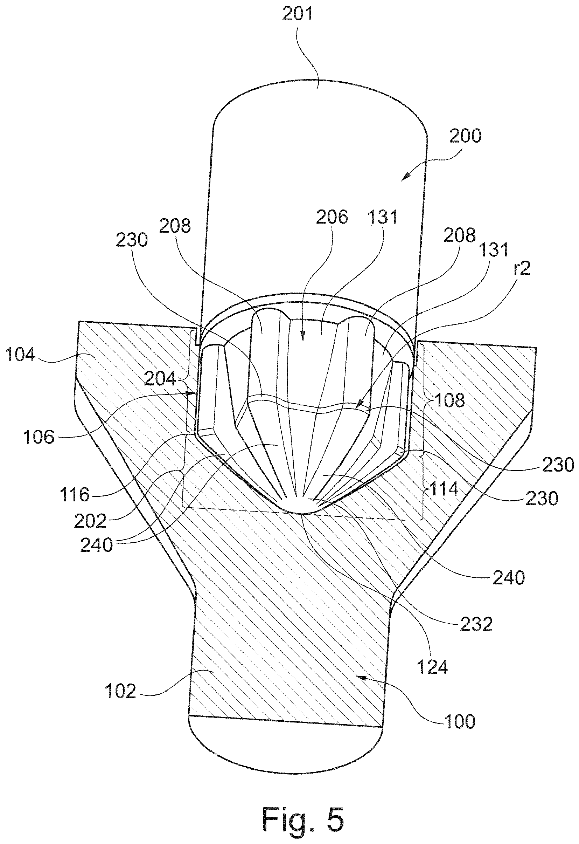

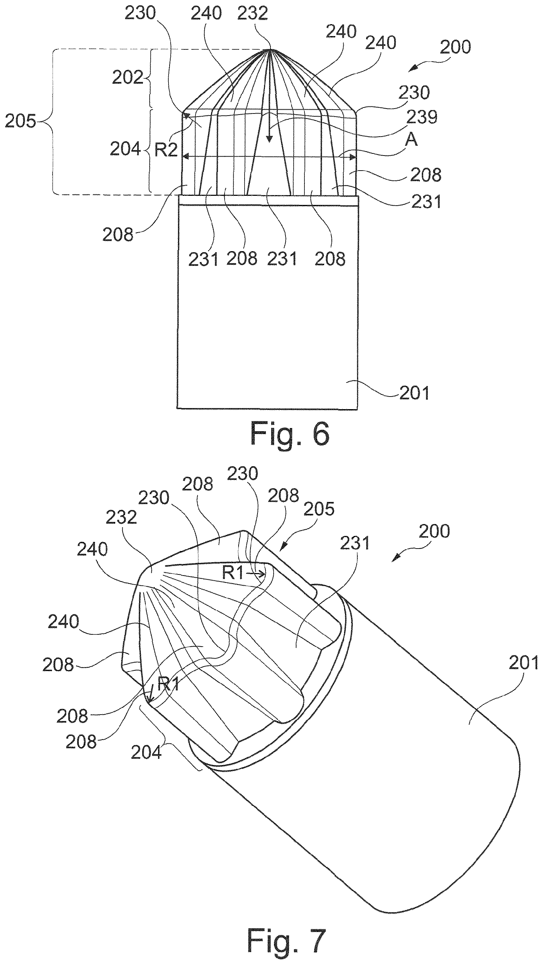

**Figur 1** zeigt eine dreidimensionale Ansicht einer Schraube 100 mit radial außenseitig abgerundeten Hohlflügeln 112 und mit axial und radial zulaufenden sowie umfänglich oszillierenden Wellen 140 in einem Hohlvertiefungsabschnitt 114 gemäß einem exemplarischen Ausführungsbeispiel der Erfindung. **Figur 2** zeigt eine andere dreidimensionale Ansicht der Schraube 100 gemäß Figur 1. **Figur 3** zeigt einen Querschnitt der Schraube 100 gemäß Figur 1. **Figur 4** zeigt eine Draufsicht eines Teils der Schraube 100 gemäß Figur 1. **Figur 5** zeigt eine zusammenwirkende Anordnung 300 aus der Schraube 100 gemäß Figur 1 bis Figur 4 und einem in einen Antrieb 106 der Schraube 100 eingreifenden Antriebselement 200 gemäß einem exemplarischen Ausführungsbeispiel der Erfindung. **Figur 6** zeigt eine Seitenansicht des Antriebselements 200 gemäß Figur 5. **Figur 7** zeigt eine räumliche Ansicht des Antriebselements 200 gemäß Figur 5 und Figur 6. **Figur 8** zeigt eine andere räumliche Ansicht des Antriebselements 200 gemäß Figur 5 bis Figur 7.

Die in Figur 1 bis Figur 5 gezeigte metallische Schraube 100 ist zum Einbringen in einen in der Figur nicht gezeigten Untergrund (zum Beispiel eine Wand) ausgebildet und mittels eines in Figur 5 bis Figur 8 gezeigten Antriebselements 200 drehantreibbar. Die zum Beispiel selbstbohrende Schraube 100 weist einen nur schematisch bzw. abschnittsweise dargestellten Schraubenschaft 102 auf, der sich in einem Endabschnitt zum Schraubenende hin (nicht gezeigt) zu einer Schraubenspitze hin verjüngen kann. Eine Außenkontur des Schraubenschafts 102 kann ein Gewinde, insbesondere ein selbstschneidendes Gewinde, aufweisen, um sich in dem Untergrund, in dem die Schraube 100 zu montieren ist, ein Gewinde zu schneiden.

An den Schraubenschaft 102 schließt sich axial - hier direkt (das heißt ohne Zwischenelement oder Zwischenabschnitt) oder alternativ indirekt (das heißt mit Zwischenelement oder Zwischenabschnitt) - ein hier als Senkkopf ausgebildeter Schraubenkopf 104 an, in dem ein Antrieb 106 (d.h. eine in spezieller Form begrenzte Aussparung in dem Schraubenkopf 104) zum Drehantreiben der Schraube 100 mittels des Antriebselements 200 ausgebildet ist. Durch den Antrieb 106 in dem Schraubenkopf 104 ist ein Antriebsprofil gebildet, welches das Antriebselement 200 mit Spiel formschlüssig in Eingriff nehmen kann, um eine Antriebskraft auf die Schraube 100 übertragen zu können.

Bei der in Figur 5 dargestellten Anordnung 300 aus der Schraube 100 und dem damit zusammenwirkenden Antriebselement 200 ist durch eine entsprechende Formgebung und Dimensionierung von Schraube 100 und Antriebselement 200 sichergestellt, dass nach Einführen des Antriebselements 200 in den Antrieb 106 der Schraube 100 im Wesentlichen kein Freiraum zwischen dem Antriebselement 200 und der Schraube 100 im Antrieb 106 verbleibt. Dadurch ist, wie unten näher beschrieben wird, eine besonders gute Kraftübertragung von dem Antriebselement 200 auf die Schraube 100 ermöglicht.

Wie in Figur 1 bis Figur 4 erkennbar ist, weist der Antrieb 106 der Schraube 100 einen schraubenaußenseitigen Hohlflügelabschnitt 108 mit kreisförmigem Hohlkern 110 auf. Der Hohlflügelabschnitt 108 erstreckt sich unmittelbar ausgehend von einer äußeren Oberfläche der Schraube 100. Entlang dem Kreisumfang des Hohlkerns 110 sind in dem dargestellten Ausführungsbeispiel sechs in Umfangsrichtung äquidistant angeordnete Hohlflügel 112 als radiale Ausbuchtungen ausgebildet, die sich ausgehend von dem Kreisumfang bis hin zu einer radial äußersten Position des Antriebs 106 hin erstrecken. Mit anderen Worten ist die Schraube 100 gemäß Figur 1 bis Figur 5 als Innensechsrund mit sechs umfänglich verteilten Hohlflügeln 112 ausgebildet. Im Bereich ihrer radial äußersten Position sind die Hohlflügel 112 entsprechend einem Hohlflügelaußenradius r1 lokal kreisförmig geformt.

Darüber hinaus weist der Antrieb 106 einen schraubeninnenseitigen Hohlvertiefungsabschnitt 114 auf, der tiefer im Inneren des Antriebs 106 angeordnet ist als der schraubenaußenseitige Hohlflügelabschnitt 108. Der Hohlvertiefungsabschnitt 114 erstreckt sich bis zu einem Boden des Antriebs 106 und schließt sich unmittelbar an den Hohlflügelabschnitt 108 an.

Der Antrieb 106 ist an einem axialen Übergang (wobei die Schraubenachse mit der Haupterstreckungsrichtung des Schraubenschafts 102 korrespondiert) zwischen dem Hohlflügelabschnitt 108 und dem Hohlvertiefungsabschnitt 114 mit einer kreisförmigen Abrundung 116 versehen, deren Kreisradius als Hohlverrundungsradius r2 bezeichnet ist (siehe Figur 3). Wie in Figur 3 zu erkennen ist, ist eine vertikal verlaufende Außenkontur des Hohlflügelabschnitts 108 gegenüber einer sich verjüngenden Außenkontur des Hohlvertiefungsabschnitts 114 abgewinkelt, d.h. knickt ausgehend vom Hohlflügelabschnitt 108 im Bereich des axialen Übergangs an der Abrundung 116 nach innen ab, um dadurch in den Hohlvertiefungsabschnitt 114 überzugehen.

Mit Vorteil beträgt der Hohlverrundungsradius r2 zwischen 50 % und 150 %, bevorzugt zwischen 80 % und 120 % und weiter bevorzugt zwischen 90 % und 110 %, des Hohlflügelaußenradius r1. In einem besonders bevorzugten Ausführungsbeispiel sind der Hohlverrundungsradius r2 und der Hohlflügelaußenradius r1 gleich, d.h. r1=r2. Dann bilden der Hohlverrundungsradius r2 und der Hohlflügelaußenradius r1 lokal einen Hohlkugelabschnitt und haben die im Zusammenhang mit Ausführungsbeispielen der Erfindung besonders günstige Form einer Kofferecke. Es hat sich herausgestellt, dass bei Beachtung dieser Designregel ein Materialfluss eines Materials eines Rohlings der Schraube 100 während eines Umformens beim Herstellen besonders günstig ist und das Ausbilden unerwünschter Falten im Profil der Schraube 100 größtenteils oder sogar vollständig vermeidet. Anschaulich kann dann ein Materialfluss beim Herstellen der Schraube 100 auch in Flächen zwischen die Hohlflügel 112 hinein erfolgen.

Besonders bevorzugt ist, wenn sowohl der Hohlflügelaußenradius r1 als auch der Hohlverrundungsradius r2 zwischen 0,4 mm und 0,5 mm beträgt und wenn ein Verhältnis zwischen dem Hohlflügelaußenradius r1 und einem Außendurchmesser a des Hohlflügelabschnitts 108 einen Wert zwischen ungefähr 0,07 und 0,08 annimmt.

Ebenfalls von Vorteil ist, wenn eine Endspitze 124 des Hohlvertiefungsabschnitts 114 abgerundet ist. Dies erleichtert eine Zentrierung der Schraube 100 in Bezug auf das Antriebselement 200.

Besonders bevorzugt ist weiter, dass bei dem Ausführungsbeispiel der Schraube 100 gemäß Figur 1 bis Figur 5 der Hohlvertiefungsabschnitt 114 Wellen 140 aufweist, die in Umfangs- oder Tangentialrichtung eine alternierende Sequenz von Erhebungen und Vertiefungen aufweist. In Zusammenwirkung mit invers geformten Wellen 240 des Antriebselements 200 kann dadurch im Bereich des Hohlvertiefungsabschnitts 114 und eines entsprechenden Vertiefungsabschnitts 202 des Antriebselements 200 eine zusätzliche Antriebsfläche (d.h. zusätzlich zu Antriebsflächen, die zwischen den Hohlflügeln 112 des Hohlflügelabschnitts 108 der Schraube 100 und Flügeln 208 eines Flügelabschnitts 204 des Antriebselements 200) geschaffen werden. Diese Antriebsflächen fördern eine wirksame und reibungsarme Übertragung eines Drehmoments vom Antriebselement 200 auf die Schraube 100. Dadurch wird die Führbarkeit und Zentrierbarkeit sowie die kraftsparende Einbringbarkeit der Schraube 100 in einen Untergrund gefördert.

Die Anzahl der Vertiefungen der Wellen 140 ist identisch zur Anzahl der Hohlflügel 112. Die Anzahl der Erhebungen der Wellen 140 ist identisch zur Anzahl von Schrägflächen 131 zwischen zwei jeweils benachbarten Hohlflügeln 112. Anders ausgedrückt setzt sich jeder der Hohlflügel 112 nach der Abrundung 116 in Form einer jeweiligen Vertiefung der Wellen 140 fort. In entsprechender Weise setzt sich jede Schrägfläche 131 zwischen zwei jeweils benachbarten Hohlflügeln 112 des Hohlflügelabschnitts 108 im Bereich des Hohlvertiefungsabschnitts 114 in Form einer jeweiligen Erhebung der Wellen 140 fort.

Wie in Figur 1 bis Figur 5 zu erkennen ist, weisen die Wellen 140 der Schraube 100 in Verlängerung der Hohlflügel 112 sich bis zu einer abgerundeten Endspitze 124 des Hohlvertiefungsabschnitts 114 erstreckende konkave Abschnitte oder Vertiefungen auf, zwischen denen sich bis zu der Endspitze 124 des Hohlvertiefungsabschnitts 114 erstreckende konvexe Abschnitte oder Erhebungen gebildet sind. Die Wellen 140 weisen am Übergang zu den Hohlflügeln 112 die oben beschriebene Abrundung 116 auf. Wenn die Wellen 140 schiffsbugförmig ausgebildet sind, kann eine besonders wirksame Übertragung von Drehmoment von dem Antriebselement 200 auf die Schraube 100 erfolgen.

In einem alternativen Ausführungsbeispiel einer Schraube 100 ohne Wellen 140 ist der Hohlvertiefungsabschnitt 114 ein Hohlkegelabschnitt mit glatter Oberfläche (nicht dargestellt).

In dem Ausführungsbeispiel gemäß Figur 1 bis Figur 5 hingegen erstrecken sich Ausläufer der Hohlflügel 112 und Zwischenbereiche zwischen den Hohlflügeln 112 bis in den Bereich der Abrundung 116 hinein und setzen sich im Hohlvertiefungsabschnitt 114 stetig im Form in Form von Vertiefungen bzw. Erhebungen der Wellen 140 fort. Ein abgerundeter Übergang ist nicht nur zwischen den Hohlflügeln 112 und entsprechenden Vertiefungen der Wellen 140 gebildet, sondern auch in einem jeweiligen Übergangsbereich zwischen den Zwischenwänden zwischen benachbarten Hohlflügeln 112 einerseits und entsprechenden Erhebungen der Wellen 140 andererseits. Die zuletzt genannten kreisförmig abgerundeten Übergänge haben ebenfalls eine vorteilhafte Wirkung auf die kontrollierte Abführung von Material während des Herstellungsverfahrens der Schraube 100.

Wie zum Beispiel in Figur 3 und Figur 5 erkennbar ist, haben bei dem Antrieb 106 der Schraube 100 die Hohlflügel 112 entlang des Hohlflügelabschnitts 108 einen durchgehend konstanten Außendurchmesser, wohingegen sich der Hohlkern 110 des Hohlflügelabschnitts 108 entlang des Hohlflügelabschnitts 108 durchgehend verjüngt. Die Hohlflügel 112 haben von einem schraubenaußenseitigen Ende des Hohlflügelabschnitts 108 bis zu der Abrundung 116 einen konstanten Außendurchmesser a. Der Hohlkern 110 des Hohlflügelabschnitts 108 verjüngt sich dagegen schraubeninnenseitig hin konisch, was anhand der Schrägflächen 131 ersichtlich ist. Insofern kann der Hohlflügelabschnitt 108, von den Hohlflügeln 112 abgesehen, als teilweise kegelstumpfförmig angesehen werden.

In Bezug auf die Wellen 140 ist noch anzumerken, dass im Bereich der Wellen 140 im Gegenprofil des korrespondierenden Antriebselements 200 mehr Spiel vorgesehen werden kann als in den Zwischenräumen. Anschaulich kann dadurch sichergestellt werden, dass das zum Beispiel als Bit ausgebildete Antriebselement 200 nicht starr bodenseitig aufsitzt. Dadurch wiederum kann erreicht werden, dass die erwünschte Keilwirkung im Bereich von Bezugszeichen 112 durch die Wellen 140 im Zusammenspiel mit dem entsprechenden Gegenprofil nicht gestört wird.

Im Weiteren wird das in Figur 5 bis Figur 8 dargestellte Antriebselement 200 zum Drehantreiben der Schraube 100 gemäß Figur 1 bis Figur 5 näher beschrieben.

Das (zum Beispiel metallische) Antriebselement 200 enthält einen Einsteckabschnitt 201 zum Einstecken in einen Akkuschrauber oder dergleichen (nicht gezeigt), um mittels eines Antriebsabschnitt 205 des Antriebselements 200 die in Figur 1 bis Figur 5 gezeigte Schraube 100 drehanzutreiben, um die Schraube 100 in einen Untergrund einzubringen. Alternativ kann der Antriebsabschnitt 205 auch als Endabschnitt eines in der Figur nicht gezeigten Schraubenschlüssels oder Schraubendrehers ausgebildet sein, der an einem Handgriff von einem Benutzer drehbetrieben werden kann, um die Schraube 100 in Untergrund einzubringen.

Das Antriebselement 200 weist den Flügelabschnitt 204 mit kreisförmigem Kern 206 und entlang des Kreisumfangs vorgesehenen Flügeln 208 auf, die sich ausgehend von dem Kreisumfang bis hin zu einer radial äußersten Position hin erstrecken. An der radial äußersten Position sind die Flügel 208 entsprechend einem Flügelaußenradius R1 kreisförmig geformt (siehe Figur 7). Ferner hat das Antriebselement 200 einen endseitigen Vertiefungsabschnitt 202, der sich direkt an den Flügelabschnitt 204 anschließt und sich bis zu einer Endspitze 232 des Antriebselements 200 erstreckt. Korrespondierend zu der Schraube 100 ist auch ein axialer Übergang zwischen dem Flügelabschnitt 204 und dem Vertiefungsabschnitt 202 mit einer kreisförmigen Abrundung 230 versehen, der durch einen virtuellen Kreis mit einem Verrundungsradius R2 gebildet ist (siehe Figur 6). Wie in Figur 6 zu erkennen ist, ist eine vertikal verlaufende Außenkontur des Flügelabschnitts 204 gegenüber einer sich verjüngenden Außenkontur des Vertiefungsabschnitts 202 abgewinkelt, d.h. knickt ausgehend vom Flügelabschnitt 204 im Bereich des axialen Übergangs nach innen ab, um dadurch in den Vertiefungsabschnitt 202 überzugehen.

Mit Vorteil beträgt der Verrundungsradius R2 zwischen 50 % und 150 % des Flügelaußenradius R1, bevorzugt zwischen 80 % und 120 % und weiter bevorzugt zwischen 90 % und 110 % des Flügelaußenradius R1. Besonders bevorzugt ist, wenn der Verrundungsradius R2 und der Flügelaußenradius R1 identisch sind, d.h. die Beziehung R1=R2 erfüllt ist. Dann können der Verrundungsradius R2 und der Flügelaußenradius R1 einen Kugelabschnitt bzw. eine Kofferecke bilden. Dies führt wiederum dazu, dass ein Materialfluss beim Herstellen des Antriebselements 200 überwiegend in Bereiche zwischen den Flügeln 208 hinein erfolgt, d.h. zu einem erheblichen Teil in die Seitenflächen des Antriebselements 200 zwischen die Flügel 208 hinein. Dieser Materialfluss ist mit einem Pfeil 239 in Figur 6 angedeutet.

Bevorzugt kann der Flügelaußenradius R1 zwischen 0,4 mm und 0,5 mm betragen. Ein Verhältnis zwischen dem Flügelaußenradius R1 und einem Außendurchmesser A des Flügelabschnitts 204 kann besonders bevorzugt in einem Bereich zwischen 0,07 und 0,08 liegen.

Um ein besonders gutes Zusammenwirken des Antriebselements 200 mit der Schraube 100 zu ermöglichen, kann außerdem die Beziehung r1=R1 und r2=R2 erfüllt sein. Es ist allerdings auch eine gewisse Abweichung von diesen Beziehungen möglich, um einen gewisses Spiel zwischen der Schraube 100 und dem Antriebselement 200 zu ermöglichen.

Wie in Figur 5 bis Figur 8 zu erkennen ist, ist der an der abgerundeten Endspitze 232 endende endseitige Vertiefungsabschnitt 202 mit einer Mehrzahl von in Umfangsrichtung angeordneten Wellen 240 versehen, die durch eine umfänglich alternierende Abfolge von Erhebungen und Vertiefungen gebildet ist. Die Anzahl der Erhebungen ist identisch zur Anzahl der Flügel 208. Die Anzahl der Vertiefungen ist identisch zur Anzahl der Zwischenflächen 231 zwischen zwei jeweils benachbarten Flügeln 208. Anders ausgedrückt setzt sich jeder der Flügel 208 nach der Abrundung 230 in Form einer jeweiligen Erhebung eines jeweiligen der Flügel 208 fort. In entsprechender Weise setzt sich jede Zwischenfläche 231 zwischen zwei jeweils benachbarten Flügeln 208 des Flügelabschnitts 204 im Bereich des Vertiefungsabschnitts 202 in Form einer jeweiligen Vertiefung der Wellen 240 fort.

Anders ausgedrückt weisen die Wellen 240 in Verlängerung der Flügel 208 sich bis zu der Endspitze 232 des Vertiefungsabschnitts 202 erstreckende konvexe Abschnitte oder Erhebungen auf, zwischen denen sich bis zu der Endspitze 232 des Vertiefungsabschnitts 202 erstreckende konkave Abschnitte oder Vertiefungen gebildet sind.

Die Wellen 240 weisen am Übergang zu den Flügeln 208 die jeweilige Abrundung 230 auf und sind vorzugsweise schiffsbugförmig ausgebildet. Dies ermöglicht eine besonders wirksame Übertragung von Drehmoment von dem Antriebselement 200 auf die Schraube 100. Ein abgerundeter Übergang ist nicht nur zwischen den Flügeln 208 und entsprechenden Erhebungen der Wellen 240 gebildet, sondern auch in einem jeweiligen Übergangsbereich zwischen den Zwischenflächen 231 zwischen benachbarten Flügeln 208 einerseits und entsprechenden Vertiefungen der Wellen 240 andererseits. Die zuletzt genannten kreisförmig abgerundeten Übergänge haben ebenfalls eine vorteilhafte Wirkung auf die kontrollierte Abführung von Material während des Herstellungsverfahrens des Antriebselements 200.

Wie zum Beispiel in Figur 5 und Figur 6 erkennbar ist, haben bei dem Antriebselement 200 die Flügel 208 entlang des Flügelabschnitts 204 einen durchgehend konstanten Außendurchmesser, wohingegen sich der Kern 206 des Flügelabschnitts 204 entlang des Flügelabschnitts 204 kontinuierlich verjüngt. Die Flügel 208 haben von einem dem Vertiefungsabschnitt 202 abgewandten Ende des Flügelabschnitts 204 bis zu der Abrundung 230 einen konstanten Außendurchmesser A. Der Kern 206 des Flügelabschnitts 204 verjüngt sich dagegen zum Vertiefungsabschnitt 202 hin konisch, was anhand der Zwischenflächen 231 ersichtlich ist. Insofern kann der Flügelabschnitt 204, von den Flügeln 208 abgesehen, als teilweise kegelstumpfförmig angesehen werden.

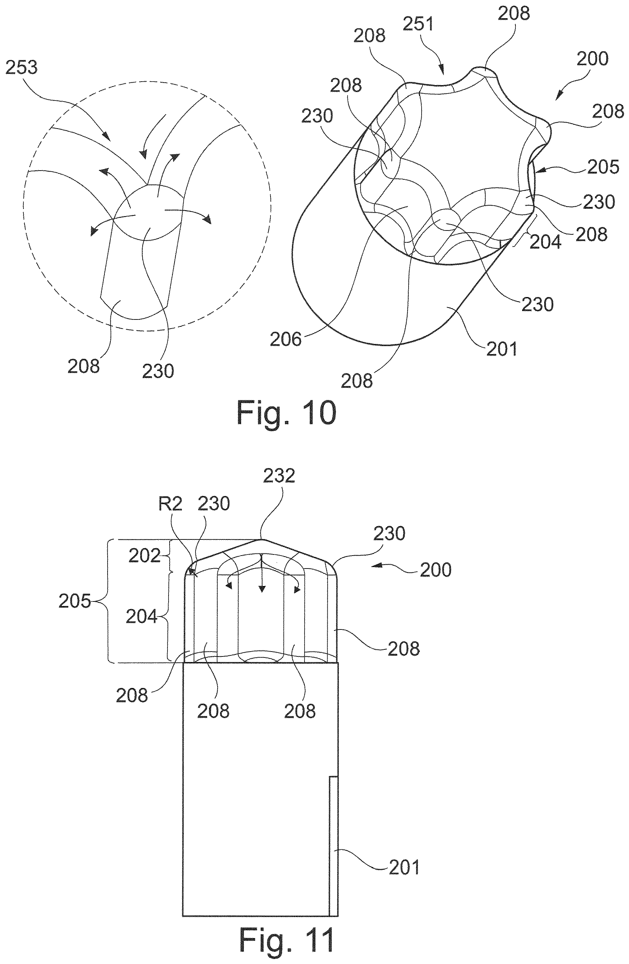

**Figur 9** zeigt eine dreidimensionale Ansicht eines Antriebselements 200 mit glattem Vertiefungsabschnitt 202 gemäß einem exemplarischen Ausführungsbeispiel der Erfindung zum Zusammenwirken mit einer korrespondierend invers geformten Schraube (nicht gezeigt). **Figur 10** zeigt eine dreidimensionale Ansicht 251 sowie eine Detailansicht 253 des Antriebselements 200 gemäß Figur 9 mit abgerundeten Flügeln 208 zum Zusammenwirken mit der korrespondierend invers geformten Schraube 100. **Figur 11** zeigt eine Seitenansicht des Antriebselements 200 gemäß Figur 9 und Figur 10.

Anders als bei dem Ausführungsbeispiel des Antriebselement 200 gemäß Figur 5 bis Figur 8 kann bei dem Ausführungsbeispiel des Antriebselements 200 gemäß Figur 9 bis Figur 11 der Vertiefungsabschnitt 202 als Kegelabschnitt ausgebildet sein, d.h. eine glatte Kegeloberfläche ohne Wellen 240 im Bereich des Vertiefungsabschnitts 202 bilden.

Wie mit Pfeilen in der Detailansicht 253 anschaulich und schematisch dargestellt, kann aufgrund der gezeigten Formgebung mit Abrundung 230 ein Materialfluss beim Herstellungsverfahren auch in Seitenflächen zwischen Flügel 208 geleitet werden. Dies erlaubt das Herstellen eines Antriebselements 200 ohne unerwünschte Faltenbildung an seiner Funktionsoberfläche.

**Figur 12** zeigt eine Draufsicht eines Antriebselements 200 gemäß einem exemplarischen Ausführungsbeispiel der Erfindung. **Figur 13** zeigt eine Querschnittsansicht des Antriebselements 200 gemäß Figur 12 entlang einer Schnittlinie X-X. Dort sind auch die Dimensionen R1, R2 und A dargestellt.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Schraube (100) zum Einbringen in einen Untergrund, insbesondere drehantreibbar mittels eines Antriebselements (200) gemäß einem der Ansprüche 6 bis 9, wobei die Schraube (100) aufweist:
einen Schraubenschaft (102);
einen sich an den Schraubenschaft (102) anschließenden Schraubenkopf (104), in dem ein Antrieb (106) zum Drehantreiben der Schraube (100) mittels eines Antriebselements (200) ausgebildet ist;
wobei der Antrieb (106) einen schraubenaußenseitigen Hohlflügelabschnitt (108) mit kreisförmigem Hohlkern (110) und entlang des Kreisumfangs vorgesehenen Hohlflügeln (112) aufweist, wobei die Hohlflügel (112) sich ausgehend von dem Kreisumfang bis hin zu einer radial äußersten Position hin erstrecken, an der die Hohlflügel (112) entsprechend einem Hohlflügelaußenradius (r1) kreisförmig geformt sind;
wobei der Antrieb (106) einen schraubeninnenseitigen Hohlvertiefungsabschnitt (114) aufweist;
wobei der Antrieb (106) an einem axialen Übergang zwischen dem Hohlflügelabschnitt (108) und dem Hohlvertiefungsabschnitt (114) eine kreisförmige Abrundung (116) entsprechend einem Hohlverrundungsradius (r2) aufweist; und
wobei der Hohlverrundungsradius (r2) zwischen 50 % und 150 % des Hohlflügelaußenradius (r1) beträgt.

2. Schraube (100) gemäß dem vorherigen Anspruch mit mindestens einem der folgenden Merkmale:
die Schraube (100) ist derart ausgebildet, dass ein Materialfluss beim Herstellen der Schraube (100) in Seitenflächen zwischen den Hohlflügeln (112) hinein erfolgt;
wobei der Hohlverrundungsradius (r2) und der Hohlflügelaußenradius (r1) einen Hohlkugelabschnitt bilden;
wobei der Hohlverrundungsradius (r2) zwischen 80 % und 120 % des Hohlflügelaußenradius (r1) beträgt;
wobei der Hohlverrundungsradius (r2) und der Hohlflügelaußenradius (r1) gleich sind;
wobei der Hohlflügelaußenradius (r1) zwischen 0,2 mm und 0,9 mm, insbesondere zwischen 0,3 mm und 0,6 mm, beträgt;
wobei ein Verhältnis zwischen dem Hohlflügelaußenradius (r1) und einem Außendurchmesser (a) des Hohlflügelabschnitts (108) in einem Bereich zwischen 0,03 und 0,11, insbesondere in einem Bereich zwischen 0,070 und 0,084 liegt;
wobei eine Endspitze (124) des Hohlvertiefungsabschnitts (114) abgerundet ist;
wobei der Hohlvertiefungsabschnitt (114) ein Hohlkegelabschnitt mit glatter Oberfläche ist;
wobei Ausläufer der Hohlflügel (112) sich bis in den Bereich der Abrundung (116) hinein erstrecken;
wobei die Schraube (100) als Innensechsrund mit sechs umfänglich verteilten Hohlflügeln (112) ausgebildet ist;
wobei der Antrieb (106) aus einer Gruppe ausgewählt ist, die besteht aus: einem zylindrischen Antrieb; einem Torx-Antrieb; einem AW-Antrieb; und einem Antrieb (106), bei dem die Hohlflügel (112) entlang des Hohlflügelabschnitts (108) einen durchgehend konstanten Außendurchmesser haben und der Hohlkern (110) des Hohlflügelabschnitts (108) sich entlang des Hohlflügelabschnitts (108) durchgehend verjüngt;
wobei eine Außenkontur des Hohlflügelabschnitts (108) gegenüber einer Außenkontur des Hohlvertiefungsabschnitts (114) abgewinkelt ist; und/oder
wobei die Schraube (100) als selbstbohrende und/oder selbstschneidende Schraube (100), insbesondere als Holzschraube oder Metallbohrschraube, ausgebildet ist.

3. Schraube (100) gemäß dem vorherigen Anspruch, wobei der Hohlvertiefungsabschnitt (114) mindestens eine Welle (140) aufweist, insbesondere eine Mehrzahl von in Umfangsrichtung angeordnete Wellen (140) aufweist.

4. Schraube (100) gemäß dem vorherigen Anspruch mit mindestens einem der folgenden Merkmale:
wobei die Wellen (140) in Verlängerung der Hohlflügel (112) sich bis zu einer Endspitze des Hohlvertiefungsabschnitts (114) erstreckende konkave Abschnitte aufweisen, zwischen denen sich bis zu der Endspitze des Hohlvertiefungsabschnitts (114) erstreckende konvexe Abschnitte gebildet sind; und/oder
wobei die Wellen (140) schiffsbugförmig ausgebildet sind.

5. Verfahren zum Herstellen einer Schraube (100) zum Einbringen in einen Untergrund, insbesondere drehantreibbar mittels eines Antriebselements (200) gemäß einem der Ansprüche 6 bis 9, wobei das Verfahren aufweist:
Ausbilden eines Schraubenschafts (102) und eines sich an den Schraubenschaft (102) anschließenden Schraubenkopfs (104);
Ausbilden eines Antriebs (106) in dem Schraubenkopf (104) zum Drehantreiben der Schraube (100) mittels eines Antriebselements (200);
Ausbilden eines schraubenaußenseitigen Hohlflügelabschnitts (108) des Antriebs (106) mit kreisförmigem Hohlkern (110) und entlang des Kreisumfangs vorgesehenen Hohlflügeln (112), wobei die Hohlflügel (112) so ausgebildet werden, dass sie sich ausgehend von dem Kreisumfang bis hin zu einer radial äußersten Position hin erstrecken, an der die Hohlflügel (112) entsprechend einem Hohlflügelaußenradius (r1) kreisförmig geformt sind;
Ausbilden des Antriebs (100) mit einem schraubeninnenseitigen Hohlvertiefungsabschnitt (114);
Ausbilden des Antriebs (100) mit einer kreisförmigem Abrundung (116) an einem axialen Übergang zwischen dem Hohlflügelabschnitt (108) und dem Hohlvertiefungsabschnitt (114) entsprechend einem Hohlverrundungsradius (r2), der zwischen 50 % und 150 % des Hohlflügelaußenradius (r1) beträgt.

6. Antriebselement (200) zum Drehantreiben einer Schraube (100), insbesondere einer Schraube (100) gemäß einem der Ansprüche 1 bis 4, zum Einbringen in einen Untergrund, wobei das Antriebselement (200) aufweist:
einen Flügelabschnitt (204) mit kreisförmigem Kern (206) und entlang des Kreisumfangs vorgesehenen Flügeln (208), wobei die Flügel (208) sich ausgehend von dem Kreisumfang bis hin zu einer radial äußersten Position hin erstrecken, an der die Flügel (208) entsprechend einem Flügelaußenradius (R1) kreisförmig geformt sind;
einen endseitigen Vertiefungsabschnitt (202);
wobei ein axialer Übergang zwischen dem Flügelabschnitt (204) und dem Vertiefungsabschnitt (202) eine kreisförmige Abrundung (230) entsprechend einem Verrundungsradius (R2) aufweist; und
wobei der Verrundungsradius (R2) zwischen 50 % und 150 % des Flügelaußenradius (R1) beträgt.

7. Antriebselement (200) gemäß dem vorherigen Anspruch mit mindestens einem der folgenden Merkmale:
das Antriebselement (200) ist derart ausgebildet, dass ein Materialfluss beim Herstellen des Antriebselements (200) überwiegend in Bereiche zwischen den Flügeln (208) hinein erfolgt;
wobei der Verrundungsradius (R2) und der Flügelaußenradius (R1) einen Kugelabschnitt bilden;
wobei der Verrundungsradius (R2) zwischen 80 % und 120 % des Flügelaußenradius (R1) beträgt;
wobei der Verrundungsradius (R2) und der Flügelaußenradius (R1) gleich sind;
wobei der Flügelaußenradius (R1) zwischen 0,2 mm und 0,9 mm, insbesondere zwischen 0,3 mm und 0,6 mm, beträgt;
wobei ein Verhältnis zwischen dem Flügelaußenradius (R1) und einem Außendurchmesser (A) des Flügelabschnitts (204) in einem Bereich zwischen 0,03 und 0,11, insbesondere in einem Bereich zwischen 0,070 und 0,084 liegt;
wobei eine Endspitze (232) des Vertiefungsabschnitts (202) abgerundet ist;
wobei der Vertiefungsabschnitt (202) als Kegelabschnitt mit glatter Oberfläche ausgebildet ist;
wobei eine Außenkontur des Flügelabschnitts (204) gegenüber einer Außenkontur des Vertiefungsabschnitts (202) abgewinkelt ist; und/oder
wobei das Antriebselement (200) als Bit, als Schraubenschlüssel oder als Schraubendreher ausgebildet ist.

8. Antriebselement (200) gemäß einem der Ansprüche 6 und 7, wobei der Vertiefungsabschnitt (202) mindestens eine Welle (240) aufweist, insbesondere eine Mehrzahl von in Umfangsrichtung angeordnete Wellen (240) aufweist.

9. Antriebselement (200) gemäß dem vorherigen Anspruch mit mindestens einem der folgenden Merkmale:
wobei die Wellen (240) in Verlängerung der Flügel (208) sich bis zu einer Endspitze (232) des Vertiefungsabschnitts (202) erstreckende konvexe Abschnitte aufweisen, zwischen denen sich bis zu der Endspitze (232) des Vertiefungsabschnitts (202) erstreckende konkave Abschnitte gebildet sind; und/oder
wobei die Wellen (240) schiffsbugförmig ausgebildet sind.

10. Verfahren zum Herstellen eines Antriebselements (200) zum Drehantreiben einer Schraube (100), insbesondere einer Schraube (100) gemäß einem der Ansprüche 1 bis 4, zum Einbringen in einen Untergrund, wobei das Verfahren aufweist:
Ausbilden eines Flügelabschnitts (204) mit kreisförmigem Kern (206) und entlang des Kreisumfangs vorgesehenen Flügeln (208), wobei die Flügel (208) so ausgebildet werden, dass sie sich ausgehend von dem Kreisumfang bis hin zu einer radial äußersten Position hin erstrecken, an der die Flügel (208) entsprechend einem Flügelaußenradius (R1) kreisförmig geformt sind;
Ausbilden eines endseitigen Vertiefungsabschnitts (202);
Ausbilden einer kreisförmigen Abrundung (230) an einem axialen Übergang zwischen dem Flügelabschnitt (204) und dem Vertiefungsabschnitt (202) entsprechend einem Verrundungsradius (R2), der zwischen 50 % und 150 % des Flügelaußenradius (R1) beträgt.

11. Schraube (100) zum Einbringen in einen Untergrund, insbesondere drehantreibbar mittels eines Antriebselements (200) gemäß Anspruch 12, wobei die Schraube (100) aufweist:
einen Schraubenschaft (102);
einen sich an den Schraubenschaft (102) anschließenden Schraubenkopf (104), in dem ein Antrieb (106) zum Drehantreiben der Schraube (100) mittels eines Antriebselements (200) ausgebildet ist;
wobei der Antrieb (106) einen schraubenaußenseitigen Hohlflügelabschnitt (108) mit kreisförmigem Hohlkern (110) und entlang des Kreisumfangs vorgesehenen Hohlflügeln (112) aufweist;
wobei der Antrieb (106) einen schraubeninnenseitigen Hohlvertiefungsabschnitt (114) aufweist;
wobei der Hohlvertiefungsabschnitt (114) mindestens eine Welle (140) aufweist, insbesondere eine Mehrzahl von in Umfangsrichtung angeordnete Wellen (140) aufweist, wobei die Wellen (140) am Übergang zu den Hohlflügeln (112) eine Abrundung (116) aufweisen.

12. Antriebselement (200) zum Drehantreiben einer Schraube (100), insbesondere einer Schraube (100) gemäß Anspruch 11, zum Einbringen in einen Untergrund, wobei das Antriebselement (200) aufweist:
einen Flügelabschnitt (204) mit kreisförmigem Kern (206) und entlang des Kreisumfangs vorgesehenen Flügeln (208);
einen endseitigen Vertiefungsabschnitt (202);
wobei der Vertiefungsabschnitt (202) mindestens eine Welle (240) aufweist, insbesondere eine Mehrzahl von in Umfangsrichtung angeordnete Wellen (240) aufweist, wobei die Wellen (240) am Übergang zu den Flügeln (208) eine Abrundung (230) aufweisen.

13. Anordnung (300) zum Einbringen einer Schraube (100) in einen Untergrund, wobei die Anordnung (300) aufweist:
die Schraube (100), die gemäß einem der Ansprüche 1 bis 4 oder 11 ausgebildet ist; und
ein Antriebselement (200) gemäß einem der Ansprüche 6 bis 9 oder 12 zum Drehantreiben der Schraube (100) zum Einbringen der Schraube (100) in den Untergrund.

14. Anordnung (300) gemäß Anspruch 13, wobei die Schraube (100) und das Antriebselement (200) derart ausgebildet sind, dass nach Einführen des Antriebselements (200) in den Antrieb (106) der Schraube (100) im Wesentlichen kein, insbesondere bodenseitiger, Freiraum zwischen dem Antriebselement (200) und der Schraube (100) im Antrieb (106) verbleibt.
